# EUROPEAN PATENT APPLICATION

(11) **EP 1 443 237 A1**
(43) Date of publication of application: **04.08.2004**
(21) Application number: 04001766.7
(22) Date of filing: 28.01.2004
(51) Int. Cl.: F16D 69/02

(54) **Pure iron fiber based friction material product**

(30) Priority: 29.01.2003 US 353897
(71) Applicant: Akebono Corporation, Farmington Hills, Michigan 48331 (US)
(72) Inventor: Shao, Xinming, Rochester Hills, Michigan 48309 (US); Hayashi, Hajime, Novi, Michigan 48335 (US)
(74) Representative: Neumann, Ernst Dieter, Dipl.-Ing.

(57) **Abstract**

A friction material having a reinforcement material that includes mineral fibers, metal fibers, aramid fibers, cellulose fibers and combinations thereof but does not include carbon steel. The friction material has a relatively uniform coefficient of friction and causes relatively less wear of braking components.

## Description

### CROSS-REFERENCE TO RELATED APPLICATIONS

Other features of the present invention are discussed and claimed in commonly assigned copending United States Application Serial No. entitled Brake Friction Material including Titanium Dioxide Particles, filed on .

### FIELD OF THE INVENTION

The present invention relates to a friction material, and more particularly relates to a reinforcement in the friction material for particular use in an industrial machine, a railway vehicle, a baggage car, a passenger car, a freight truck, or the like wherein a brake pad, a brake lining, a clutch facing, or the like, is used in the above-mentioned applications

### BACKGROUND OF THE INVENTION

Automotive brake systems must satisfy a certain set of consumer expectations, such as comfort, durability, and reasonable cost. These expectations are translated into a set of specific requirements for the brake system such as a high and stable friction coefficient, vibration and noise characteristics within a predetermined limit, and low wear rates for the friction material and rotor mating surfaces. All of the aforesaid requirements have to be achieved simultaneously at a reasonable cost. Particularly, the performance has to be stable under varying application conditions, over extremes in temperature, humidity, speed, and deceleration rate for occasional or many consecutive stops.

Friction materials serve in a variety of ways to control the acceleration and deceleration of vehicles and machines. The friction materials may be resin- or rubber-bound composites based on asbestos, metallic fibers, or a combination of other fibers. The friction material is generally composed of binders, reinforcements, and fillers.

Brake linings and clutch facings consist of friction materials, which are employed to convert the kinetic energy of the moving vehicle or machine part into heat to thereby remove the kinetic energy and halt the movement of the vehicle or machine part. Typically, the friction material absorbs the heat and gradually dissipates it into the atmosphere. The friction material is considered to be the expendable portion of the brake couple which, over a long period of use, is converted to wear debris and gases.

Reinforcement materials are frequently employed in friction materials for enhancing a predetermined characteristic such as increasing the strength of the friction material, providing varying degrees of wear resistance, heat dissipation, temperature stabilization, and/or high and low temperature friction performance.

Reinforcement materials are also used to provide an abrasive attribute to the friction material. The magnitude of abrasiveness of the filler dictates many performance and wear characteristics of the braking system. To that end, extreme abrasiveness may lead to excellent performance but contribute to excessive wear of braking components. Insufficient abrasiveness may protect the braking components but provide relatively poor braking characteristics.

### SUMMARY OF THE INVENTION

In one preferred form, the present invention provides a braking element comprising a friction material, which is comprised of a binder, a filler, and a reinforcement material. The reinforcement material essentially consists of mineral fibers, metal fibers, aramid fibers, cellulose fibers, and combinations thereof. The metal fibers are an annealed iron fiber with a length in range of about 0.5 to about 6 millimeters and a width in a range of about 25 micrometers to about 200 micrometers. The iron fiber content in the friction material is in a range between about 0.5 v % to about 40 v %.

Further areas of applicability of the present invention will become apparent from the drawings and detailed description provided hereinafter. It should be understood that the detailed description and specific examples, while indicating the preferred embodiment of the invention, are intended for purposes of illustration and example only and are not intended to limit the scope of the invention.

### BRIEF DESCRIPTION OF THE DRAWINGS

The present invention will become more fully understood from the detailed description and the accompanying drawings, wherein:

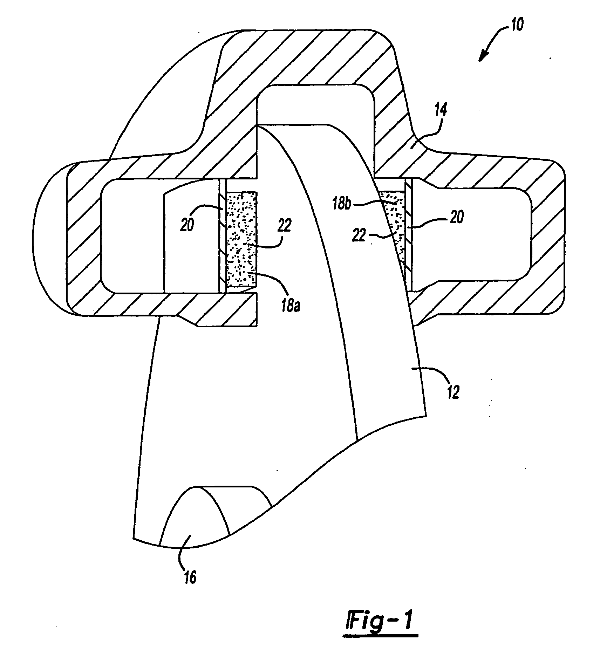

Figure 1 is a cross-sectional view of a disc brake system.

### DETAILED DESCRIPTION OF THE PREFERRED EMBODIMENTS

In Figure 1, a preferred embodiment of the present invention is shown with reference to a simplified and exemplary vehicle disc brake system 10. The disc brake system 10 includes a rotor 12, a caliper 14, and a hub 16. The disc brake system 10 also includes a pair of outboard and inboard brake elements 18a and 18b, respectively, referred to hereinafter as brake elements 18. The brake elements 18 are mounted to the caliper 14 using conventional methods well known to one of ordinary skill in the art. One of ordinary skill in the art will readily appreciate the brake system 10 is shown in an simplified fashion; a more detailed explanation of an exemplary disc brake system is shown in commonly assigned United States Patent Number 4,351,421, which is hereby incorporated by reference in its entirety as if fully set forth herein.

The brake elements 18 include a structural backing 20 and a friction material 22. The friction material 22 is mounted to the structural backing 20 in a conventional way, well-known to one of ordinary skill in the art. An example of one such mounting method is disclosed in commonly assigned United States Patent Number 5,073,099, which is hereby incorporated by reference in its entirety as if fully set forth herein.

The brake elements 18 squeeze against rotor 12 to slow the rotation of the rotor 12 to thereby slow the vehicle (not shown) to a desired speed. As noted above, friction is produced when the brake elements 18 come into contact with the rotor 12; this in turn, causes the brake elements 18 to heat up and ultimately wear.

The friction material 22 is comprised of a binder, a filler, and a reinforcement, which may be combined in a slurry form, for example, and pressed or molded into a desired shape. The reinforcement is comprised of iron fibers but neither the reinforcement, the binder, nor the filler includes low-carbon steel. The formulation of the friction material in this manner provides many advantages in performance and durability; the benefits of which will be discussed further. Additionally, iron fibers without low-carbon steel provide a low cost and advantageous composition of the friction material. As those of ordinary skill in the art will appreciate, low-carbon steel is used in a friction material for purposes that include reinforcement. Accordingly, it will be understood that no carbon steel will be included in the friction material when it is stated that the reinforcement lacks a low-carbon steel component.

In the preferred embodiment of the present invention, the reinforcement of the friction material comprises an annealed iron fiber but is devoid of low-carbon steel. The iron fibers are commercially available from many vendors. One such exemplary supplier is Sunny Metal Inc. 01, Jinxin Road, Nancun-Yuangang, Panyu, Guangzhou, China, 511442, under the product name Annealed Vibration Cutting Iron Fiber. One of ordinary skill in art will readily appreciate that iron fibers of the requisite type and dimension can be acquired from many vendors.

In the preferred embodiment of the present invention, the length of the iron fibers is in a range of about 0.5 millimeter to about 6 millimeters, with a preferred range of about 2.2 millimeters to about 3.2 millimeters providing optimal performance. The width of the irons fibers is in a range of about 25 micrometers to about 200 micrometers, with a preferred range of about 60 micrometers to about 90 micrometers providing optimal performance. To maintain desired performance characteristics of the friction material, the length-to-width ratio of iron fibers ranges between about 2.5 to 1 to about 240 to 1. One skilled in the art will readily appreciate that deviation from the exact sizes of the iron fibers will not render the invention inoperable but may only reduce performance.

Experimental results have shown that use of iron fibers without any low-carbon steel in the remainder of the friction material produces less disc thickness variation and overall wear of the braking components than friction materials containing low-carbon steel. Disc thickness variation or DTV refers to non-uniform thickness of the disc rotor. Disc thickness variation can be caused by many different things, one of which includes intermittent rubbing between the friction material and the rotor when the caliper is not engaged (brake pedal is not pressed) because the braking element has not fully disengaged the rotor. A rotor with disc thickness variation will transmit a pulsing sensation as the braking element intermittently makes contact with the rotor. Tests measuring disc thickness variation show that friction materials with iron fibers that are devoid of low-carbon steel as compared to friction materials with low-carbon steel show a reduction of disc thickness variation of approximately 60%.

The exclusion of low-carbon steel fibers in the friction material allows the characteristics of the iron fiber to predominate the reinforcement component of the friction material. To that end, the iron fibers are a softer metallic fiber when compared to low-carbon steel fibers. Using the softer iron fibers produces less disc thickness variation as mentioned above. Further, it produces less judder and other forms of vibration that for example wear suspension components.

The iron fibers are softer and produce less brake component wear but the exclusion of low-carbon steel also produces a friction coefficient of less magnitude, generally in the range of about 3.5 to about 4. Notwithstanding the reduction in magnitude of the friction coefficient, the breaking elements can easily produce enough frictional force to stop a vehicle. The slight change in the magnitude of the friction coefficient of the friction material relative to friction materials containing low-carbon steel may provide minor changes in the duty cycle of the friction material depending on the application. Accordingly, graphite lubricants, coarser graphite, or other conventional components of the friction material may be adjusted as necessary to maintain the robustness and overall durability of the friction material.

In the preferred embodiment, annealed iron fibers are mixed into the friction material as a percentage of total volume of the friction material, such that a range is about five-tenths of one percent by volume (0.5 v %) up to about forty percent by volume (40 v %). A preferred range is about two percent by volume (2 v %) up to about twenty-eight percent by volume (28 v %), with the preferred range providing optimal performance characteristics. One skilled in the art will readily appreciate that adherence to the exact percentage of total volume per component is not required to maintain operability of the invention, but the deviation from the exact percentages may reduce performance of the friction material.

Table 1 shows the preferred ranges of a first exemplary composition of the friction material where the values found in the column labeled "Preferred Example Ranges" represents preferred ranges of the components within the friction material.

**Table 1.**

| Exemplary Components of the Friction Material | Preferred Example Ranges (percentage of total volume) |
|---|---|
| Phenolic Resin | about 5 to 23 |
| Mineral Fiber | about 0 to 12 |
| Iron Fiber | about 2 to 28 |
| Brass Fiber | about 0 to 10 |
| Copper Fiber | about 0 to 10 |
| Bronze Fiber | about 0 to 10 |
| Cellulose Fiber | about 0 to 8 |
| Aramid Fiber | about 0 to 5 |
| Barium Sulfate | about 3 to 15 |
| Coke/Graphite | about 1 to 30 |
| Metal Sulfides | about 0 to 15 |
| Metal Powders | about 1 to 35 |
| Reground rubber tire tread dust | about 1 to 9 |
| Cashew Nut Shell Friction Dust | about 2 to 20 |
| Titanium Dioxide Particles | about 2 to 20 |
| Other metals of metal oxides | about 0 to 10 |

Table 2 shows the preferred values of a second exemplary composition of the friction material where the values found in the column labeled "Preferred Example Values" are preferred values for the friction material. One skilled and the art will readily appreciate that the values outlined below in Table 1 and Table 2 are exemplary ranges and values and, as such, do not limit the scope of the present invention.

**Table 2.**

| Components of the Friction Material | Preferred Example Values (percentage of total volume) |
|---|---|
| Phenolic Resin | about 14 |
| Iron Fiber | about 25 |
| Aramid Fiber | about 2 |
| Barium Sulfate | about 12 |
| Synthetic Graphite | about 30 |
| Reground rubber tire tread dust | about 3 |
| Cashew Nut Shell Friction Dust | about 4 |
| Titanium Dioxide Particles | about 8 |
| Zinc Powder | about 2 |

One of ordinary skill in art will readily appreciate that many vendors supply multiple commercially available mineral fibers suitable for use in the friction material. In the preferred embodiment of the present invention, one such exemplary mineral fiber is Lapinus® Fiber, which is commercially available from Lapinus Fibres B.V., 6040 KD Roermond, The Netherlands, under the trade name Roxul® 1000. Roxul® 1000, for example, is a gray and/or green fibrous mineral wool batting or board.

One of ordinary skill in art will readily appreciate that many vendors supply multiple commercially available ceramic fibers suitable for use in the friction material. In the preferred embodiment of the present invention, one such exemplary ceramic fiber is Superwool® Fiber, which is commercially available from Thermal Ceramics, P.O. Box 923, Dept. 167, Augusta, GA 30903. Superwool® Fiber, for example, is an alkaline earth silicate wool batting or board.

One of ordinary skill in art will readily appreciate that many vendors supply multiple commercially available cellulose fibers suitable for use in the friction material. In the preferred embodiment of the present invention, one such exemplary cellulose fiber is Interfiber®, which is commercially available from Vanco Manufacturing, Inc., 1615 Vanderbilt Road, Portage, MI 49002. Interfiber®, for example, is a polyoxypropylene powder.

One of ordinary skill in art will readily appreciate that many vendors supply multiple commercially available metal sulfides suitable for use in the friction material. In the preferred embodiment of the present invention, possible exemplary metal sulfides are antimony tri-sulfide, copper sulfide, stannic sulfide, and stannous sulfide all of which are commercially available.

One of ordinary skill in art will readily appreciate that many vendors supply multiple commercially available forms of graphite suitable for use in the friction material. In the preferred embodiment of the present invention, one such exemplary source of suitable commercially available graphite is from Asbury Carbons, Inc., 405 Old Main Street, Asbury, NJ, 08802.

One of ordinary skill in art will readily appreciate that many vendors supply multiple commercially available aramid fibers suitable for use in the friction material. In the preferred embodiment of the present invention, one such exemplary mineral fiber is Kevlar® Fiber, which is commercially available from DuPont, 5401 Jefferson Davis Hwy, Richmond, VA 23234 among others.

The titanium dioxide particles mentioned above are discussed in greater detail in commonly assigned copending United States Application Serial No. entitled Brake Friction Material including Titanium Dioxide Particles, filed on , which is hereby incorporated by reference in its entirety as if fully set forth herein.

Another component of the friction material is the filler. Exemplary fillers include anti-oxidants, asbestos, barium sulfate, calcium carbonate, cashew nut oil, cotton, fiber of mixed oxides, lime, potassium titanate, diene rubber, nitrile rubber, scrap rubber, sea coal, and zinc oxide among others. One skilled in the art will readily appreciate the wide ranging the availability of other filler materials. A more detailed list of possible and exemplary fillers is disclosed in Compositions, Fucntions, and Testing of Friction Brake Materials and their Additives by Peter J. Blau (prepared by the Oak Ridge National Laboratory, Document Number ORNL/TM-2001.64), which is incorporated by reference in its entirety as if fully set forth herein.

In the preferred embodiment, the use of iron fibers while excluding any low-carbon steel fibers in the reinforcement of the friction material in no way alters the applicability of the friction material. While the percent of total volume or size of other components in the friction material may need to be adjusted to compensate for the specific needs of certain applications, the iron fibers provide benefits across many friction material applications. One skilled in art will readily appreciate that components in a friction material can be adjusted to tailor the friction material to the wide range of applications without deviating from the scope of the present invention. Further, the ability to dissipate heat is not hindered with use of iron fibers without low-carbon steel fibers, as reinforcement composition provides equal or better heat dissipation characteristics when compared to other reinforcement compositions.

In the preferred embodiment of the present invention, the binder is a phenolic resin. The friction material components are subjected to a surface treatment with a phenolic resin. The substances subjected to such a surface treatment have an advantage that they can be easily mixed with other materials when a friction material is manufactured. The mixture by volume of the phenolic resin is preferably in a range of nine percent by volume (9 v %) to twenty five percent by volume (25 v %).

In alternative embodiment, a silane coupling agent can be used in lieu of the phenolic resin. Further detail as to use and substitution of the phenolic resin, the silane coupling agent or other binders, is more fully discussed in commonly assigned pending United States Patent Application number 09/735,625, which is hereby incorporated by reference in its entirety as if fully set forth herein.

The foregoing description of the invention is merely exemplary in nature and, thus, variations that do not depart from the gist of the invention are intended to be within the scope of the invention. Such variations are not to be regarded as a departure from the spirit and scope of the invention.

## Claims

1. A braking element comprising a friction material, the friction material being entirely devoid of carbon steel and including:
a reinforcement material selected from a group consisting essentially of mineral fibers, non-carbon steel metal fibers, aramid fibers, cellulose fibers, and combinations thereof.

2. The braking element of claim 1, wherein the metal fibers are iron fibers.

3. The braking element of claim 2, wherein the iron fibers are annealed.

4. The braking element of claim 2, wherein a length of the iron fibers is in a range of about 0.5 millimeters to about 6 millimeters.

5. The braking element of claim 4, wherein the length of the iron fibers is in a range of about 2.2 millimeters to about 3.2 millimeters.

6. The braking element of claim 2, wherein a width of the iron fibers is in a range of about 25 micrometers to about 200 micrometers.

7. The braking element of claim 6, wherein the width of the iron fibers is in a range of about 60 micrometers to about 90 micrometers.

8. The braking element of claim 2, wherein a length-to-width ratio of the iron fibers ranges between about 2.5 to 1 to about 240 to 1.

9. The braking element of claim 2, wherein an amount of the iron fibers in the friction material ranges between about 0.5 v % to about 40 v %.

10. The braking element of claim 9, wherein the amount of the iron fibers in the friction material ranges between about 2 v % to about 28 v %.

11. The braking element of claim 1, wherein the non-carbon steel metal fibers are selected from a group consisting of brass fibers, copper fibers, bronze fibers, iron fibers and combinations thereof.

12. A friction material being entirely devoid of carbon steel and including:
a reinforcement material selected from a group consisting essentially of mineral fibers, non-carbon steel metal fibers, aramid fibers, cellulose fibers, and combinations thereof.

13. The friction material of claim 12, wherein the metal fibers are iron fibers.

14. The friction material of claim 13, wherein the iron fibers are annealed.

15. The friction material of claim 13, wherein a length of the iron fibers is in a range of about 0.5 millimeters to about 6 millimeters.

16. The friction material of claim 15, wherein the length of the iron fibers is in a range of about 2.2 millimeters to about 3.2 millimeters.

17. The friction material of claim 13, wherein a width of the iron fibers is in a range of about 25 micrometers to about 200 micrometers.

18. The friction material of claim 17, wherein the width of the iron fibers is preferably in a range of about 60 micrometers to about 90 micrometers.

19. The friction material of claim 13, wherein a length-to-width ratio of the iron fibers ranges between about 2.5 to 1 to about 240 to 1.

20. The friction material of claim 13, wherein an amount of the iron fibers in the friction material ranges between about 0.5 v % to about 40 v %.

21. The friction material of claim 20, wherein the amount of the iron fibers in the friction material ranges between about 2 v % to about 28 v %.

22. The friction material of claim 12, wherein the non-carbon steel metal fibers are selected from a group consisting of brass fibers, copper fibers, bronze fibers, iron fibers, and combinations thereof.

23. A clutch comprising a friction material, the friction material being entirely devoid of carbon steel and including:
a reinforcement material selected from a group consisting essentially of mineral fibers, non-carbon steel metal fibers, aramid fibers, cellulose fibers, and combinations thereof.

24. The clutch of claim 23, wherein the metal fibers are annealed iron fibers.

25. The clutch of claim 24, wherein a length-to-width ratio of the annealed iron fibers ranges between about 2.5 to 1 to about 240 to 1.

26. The clutch of claim 24, wherein an amount of the annealed iron fibers in the friction material ranges between about 0.5 v % to about 40 v %.

27. The clutch of claim 24, wherein an amount of the annealed iron fibers in the friction material ranges between about 2 v % to about 28 v %.

28. A braking element comprising a friction material, the friction material comprising iron fibers and not carbon steel.

29. The braking element of claim 28, wherein an amount of the iron fibers in the friction material ranges between about 0.5 v % to about 40 v %.

30. The braking element of claim 29, wherein the amount of the iron fibers in the friction material ranges between about 2 v % to about 28 v %.

31. The braking element of claim 29, wherein a length-to-width ratio of the iron fibers ranges between about 2.5 to 1 to about 240 to 1.
